# EUROPÄISCHE PATENTANMELDUNG

(11) **EP 3 088 817 A1**
(43) Veröffentlichungstag der Anmeldung: **02.11.2016**
(21) Anmeldenummer: 15166076.8
(22) Anmeldetag: 30.04.2015
(51) Int. Cl.: F24J 2/00

(54) **MODULARER SOLARKOLLEKTOR**

(71) Anmelder: Novosol GmbH & Co. KG, 44227 Dortmund (DE)
(72) Erfinder: Tourel, Sylvain, 45525 Hattingen (DE)
(74) Vertreter: Simandi, Claus

(57) **Zusammenfassung**

Die vorliegende Erfindung betrifft einen modularen Solarkollektor, mit dem Sonnenenergie in eine andere Energieform, beispielsweise elektrische Energie umgewandelt werden kann. Dabei geht es insbesondere um einen Solarkollektor (10), der eine Vielzahl von Modulen (20) umfasst, wobei jedes Modul (20) mindestens ein erstes Solarpaneel (22) und ein zweites Solarpaneel (24) umfasst, und wobei Module (20) zu einem Solarkollektor (10) verbunden werden können, wobei sich die Schwerpunkte der Module (20) parallel zu einer Hauptebene (H) erstrecken, und sich das erste Solarpaneel (22) in der Hauptebene (H) erstreckt und sich das zweite Solarpaneel (24) in einem ersten Winkel zur Hauptebene (H) erstreckt, und die Solarpaneele entlang einer ersten Verbindungsachse so befestigt werden, dass der Winkel unveränderlich ist.

## Beschreibung

### Gebiet der Erfindung

Die vorliegende Erfindung betrifft einen modularen Solarkollektor, mit dem Sonnenenergie in eine andere Energieform, insbesondere elektrische Energie umgewandelt werden kann.

### Hintergrund der Erfindung

Es gibt eine Vielzahl von Solarkollektoren, welche teils Photovoltaikzellen und teils andere Elemente zur Energieumwandlung einsetzen. Trotz vieler erfolgversprechender Ansätze bleibt es eine erhebliche Herausforderung, Sonnenkollektoren effektiver zu gestalten. Dabei ist eine Effizienzsteigerung um wenige Prozent oder auch nur Prozentbruchteile eine ernsthafte Herausforderung und im Hinblick auf den Umfang der Anwendungsmöglichkeiten ein lohnendes Unterfangen.

Das US-Patent US 8,878,049 B2 offenbart einen Solarkollektor, bei dem über einen beispielsweise parabolischen Spiegel Sonnenlicht auf einen vorbestimmten Punkt konzentriert wird. An dieser Stelle kann eine Energieumwandlungseinheit vorgesehen werden. Der Reflektor besteht aus einzelnen Paneelflächen. Diese können untereinander verbunden werden und durch einen dahinter angeordneten Rahmen gestützt werden.

Insgesamt mag sich so ein effektiver Kollektor ergeben. Er nimmt allerdings auch einigen Raum ein und ist beispielsweise zur Bedeckung einer Hausfassade oder eines Hausdaches wenig geeignet.

Das europäische Patent EP 1 301 396 B1 betrifft eine Solaranlage, welche Photovoltaikzellen verwendet. Diese Photovoltaikzellen sind in einer ersten Ebene nebeneinander angeordnet. Der Solarkollektor ist speziell für Anwendungen in der Luft- und Raumfahrt optimiert. Im Hinblick auf diese Anwendungen sind Abstände zwischen zwei parallel vorgesehenen Reihen von Photovoltaikzellen vorgesehen. Zwischen den Reihen von Photovoltaikzellen können daher Reflektoren positioniert werden. Die Reflektoren ragen dabei über die Ebene der Photovoltaikzellen hinaus. Die Anordnung insgesamt kann den Eindruck eines Shed-Daches erzeugen.

Die deutsche Gebrauchsmusterschrift DE 20 2006 020 180 U1 offenbart ein Solardach, welches eine Vielzahl von Solarmodulen aufweist und welches eine geschlossene, dichte Dachhaut bilden kann. Benachbarte Solarmodule werden flächig angeordnet. Einzelne der Flächen sind jedoch zueinander geneigt angeordnet. Dazu dient ein Tragwerk, welches mit zusätzlichen Stützelementen ausgerüstet ist. Die Stützelemente erlauben es, dass die Solarpaneele eine klassische Satteldachform bilden. Es ist zusätzlich vorgesehen, dass die Solarpaneele beweglich zueinander angeordnet werden, so dass mit Hilfe von beispielsweise Elektromotoren ein günstiger Winkel zur Sonne eingestellt werden kann.

Die vorliegende Erfindung strebt an, ein effizient arbeitendes Solarmodul zur Verfügung zu stellen. Wichtig ist dabei, dass das Solarmodul leicht montiert werden kann, beispielsweise auf einer Dachfläche oder an einer Hausfassade. Die Anpassung an die Größe einer solchen Fläche soll ebenfalls unkompliziert sein. Nichtsdestotrotz soll die Herstellung und Montage preiswert sein und die Konstruktion eine lange Lebensdauer versprechen.

Diese Vorteile werden durch einen Solarkollektor nach Anspruch 1 erreicht.

Es geht hierin allgemein um einen Solarkollektor, der Sonnenlicht in eine andere Energieform umwandeln kann. Eine solche Energieform kann beispielsweise Wärme sein, wenn das Sonnenlicht ein entsprechendes Medium aufheizt. Vorzugsweise wird Sonnenlicht jedoch in elektrische Energie umgewandelt. Dabei kommen in der Regel Photovoltaik-Zellen zum Einsatz, welche hierin nachfolgend auch kurz als PV-Zellen bezeichnet werden.

Der erfindungsgemäße Solarkollektor soll modular aufgebaut sein. Dazu soll er eine Vielzahl von Modulen umfassen. Mindestens werden also zwei Module umfasst, in der Regel werden jedoch mehrere Duzend oder auch mehrere hundert, also zumindest mehr als zehn Module umfasst. Diese Module sollen jeweils zumindest ein erstes und ein zweites Solarpaneel umfassen. Ein Solarpaneel ist dabei eine Einheit, welche bereits ohne Verbindung mit weiteren Solarpaneelen geeignet ist, Energie zu erzeugen. Ein Solarpaneel kann dementsprechend eine PV-Zelle sein. Ein Solarpaneel erstreckt sich dabei typischerweise im Wesentlichen flächig. Es kann in der Aufsicht auch die Fläche einer rechteckigen, quadratischen oder runden Form haben. Als runde Form kommt die typische Wafer-Form in Betracht, wenngleich Wafer zweckmäßigerweise häufig rechteckig eingefasst werden.

Mindestens zwei Solarpaneele können zu einem Modul verbunden werden. Die Module ihrerseits können dann zu einem Solarkollektor verbunden werden. Die Schwerpunkte der Module erstrecken sich entlang einer Verbindungsebene. Diese Verbindungsebene und parallele Ebenen sind somit auch die hauptsächliche Erstreckungsebenen des Solarkollektors. Zur Beschreibung des Solarkollektors wird zweckmäßigerweise eine Ebene, die Hauptebene, benutzt, welche parallel zur Verbindungsebene verläuft und in der die meisten Solarpaneele angeordnet sind.

Nach der vorliegenden Erfindung soll sich mindestens das erste oder das zweite Solarpaneel in einem ersten Winkel zur Hauptebene erstrecken. In diesem Zusammenhang ist unter einem Winkel ein von 0 Grad verschiedener Winkel zu verstehen. Die Solarpaneele stoßen entlang einer ersten Verbindungsachse aneinander und sollen entlang dieser Verbindungsachse so befestigt werden, dass der erste Winkel unveränderlich ist.

Durch die winklige Anordnung der Solarpaneele erhält jedes Modul also eine dreidimensionale Struktur.

Eine solche dreidimensionale Struktur hat sich als sehr zweckmäßig erwiesen, um einen effizienteren Solarkollektor aufzubauen. Die Dreidimensionalität ist andererseits zunächst auf die Module beschränkt. Da die einzelnen Module relativ zum Solarkollektor insgesamt kleine Bauteile sind, ist die Gesamtform des Solarkollektors durch die Form der Module und auch durch ihre Dreidimensionalität nicht stark bestimmt. Es ist daher möglich, dass der Solarkollektor nur solche Module umfasst, deren Schwerpunkte exakt in einer Hauptebene liegen.

Im Sinne der Erfindung ist auch ein Solarkollektor zweckmäßig, welcher ferner ein drittes Solarpaneel umfasst. Dieses dritte Solarpaneel kann sich ebenfalls in der Hauptebene erstrecken. Das dritte Solarpaneel kann sich auch außerhalb der Hauptebene erstrecken. Dabei bildet es einen zweiten Winkel zur Hauptebene. Dieser zweite Winkel soll wiederum von 0 Grad verschieden sein.

Zweckmäßig ist es, wenn der erste Winkel 90 Grad beträgt. In anderen Ausführungen ist es zweckmäßig, wenn der erste Winkel zwischen 50 und 80 Grad beträgt. Dabei ist als erster Winkel derjenige der beiden Winkel mit der Hauptebene H zu nehmen, welcher der kleinere Winkel ist. Entsprechend gilt auch, dass es zweckmäßig ist, wenn der zweite Winkel 90 Grad beträgt oder alternativ, wenn der zweite Winkel zwischen 50 und 80 Grad beträgt.

Es hat sich als zweckmäßig erwiesen, Solarkollektoren zur Verfügung zu stellen, bei denen der erste Winkel und der zweite Winkel gleich groß sind. Solche Kollektoren sind symmetrisch und daher stabil herzustellen.

Die Module müssen zu einem Solarkollektor verbindbar sein. Hierbei kann eine mechanische Verbindung zweckmäßig sein. Alternativ kommt auch eine klebende Verbindung in Betracht. Insbesondere im Falle der mechanischen Verbindung ist eine trennbare Verbindung zweckmäßig. In dieser Weise können schadhafte Module aus dem Modulverband, also dem Solarkollektor leicht entfernt werden und durch andere Module ersetzt werden. Eine Reihe von Solarkollektoren hat sich im Rahmen der Erfindung, also insbesondere im Sinne eines Solarkollektors nach Anspruch 1 als zweckmäßig erwiesen:
- Ein Solarkollektor, welcher ein erstes Solarpaneel , ein zweites Solarpaneel, ein drittes Solarpaneel und ein viertes Solarpaneel umfasst, wobei das erste Solarpaneel senkrecht zur Hauptebene steht, das zweite Solarpaneel sich an das erste Solarpaneel anschließt und in der Hauptebene verläuft, das dritte Solarpaneel sich an das zweite Solarpaneel anschließt und in der Hauptebene verläuft, und das vierte Solarpaneel sich an das dritte Solarpaneel anschließt und senkrecht zur Hauptebene verläuft.
- Ein Solarkollektor, welcher ein erstes, ein zweites und ein drittes Solarpaneel umfasst, wobei sich das erste Solarpaneel in der Hauptebene erstreckt, sich das zweite Solarpaneel an das erste Solarpaneel anschließt und senkrecht auf der Hauptebene steht, und sich das dritte Solarpaneel an das zweite Solarpaneel anschließt und in der Hauptebene verläuft.
- Ein Solarkollektor, welcher ein erstes Solarpaneel, ein zweites Solarpaneel, ein drittes Solarpaneel und ein viertes Solarpaneel umfasst, wobei sich das erste Solarpaneel in der Hauptebene erstreckt, sich das zweite Solarpaneel an das erste Solarpaneel anschließt und senkrecht zur Hauptebene verläuft, wobei das dritte Solarpaneel an das zweite Solarpaneel anschließt und senkrecht zur Hauptebene verläuft, und wobei das vierte Solarpaneel an das dritte Solarpaneel angrenzt und in der Hauptebene verläuft.
- Ein Solarkollektor, welcher ein erstes Solarpaneel, ein zweites Solarpaneel und ein drittes Solarpaneel umfasst, wobei das erste Solarpaneel sich in der Hauptebene erstreckt, und das zweite Solarpaneel sich entlang einer ersten Verbindungsachse an das erste Solarpaneel anschließt, und das zweite Solarpaneel an der ersten Verbindungsachse mit der Hauptebene einen Winkel zwischen 50 und 80 Grad einschließt, und wobei sich an das zweite Solarpaneel entlang einer zweiten Verbindungsachse ein drittes Solarpaneel anschließt, und das dritte Solarpaneel mit der Hauptebene (H) einen Winkel einschließt, welcher 50-80 Grad beträgt.
- Ein Solarkollektor, welcher ein erstes Solarpaneel, ein zweites Solarpaneel, ein drittes Solarpaneel und ein viertes Solarpaneel umfasst, wobei sich das zweite Solarpaneel an das erste Solarpaneel anschließt und mit der Hauptebene einen ersten Winkel von 50-80 Grad bildet, und wobei sich das dritte Solarpaneel an das zweite Solarpaneel anschließt und mit der Hauptachse ebenfalls einen Winkel von 50-80 Grad bildet, und wobei sich das vierte Solarpaneel entlang einer dritten Verbindungsachse an das dritte Solarpaneel anschließt, und das vierte Solarpaneel in der Hauptebene verläuft.

Weitere Merkmale, aber auch Vorteile der Erfindung, ergeben sich aus den nachfolgend aufgeführten Zeichnungen und der zugehörigen Beschreibung. In den Abbildungen und in den dazugehörigen Beschreibungen sind Merkmale der Erfindung in Kombination beschrieben. Diese Merkmale können allerdings auch in anderen Kombinationen von einem erfindungsgemäßen Gegenstand umfasst werden. Jedes offenbarte Merkmal ist also auch als in technisch sinnvollen Kombinationen mit anderen Merkmalen offenbart zu betrachten. Die Abbildungen sind sämtlich leicht vereinfacht und schematisch.
- Fig. 1: zeigt einen Solarkollektor, wie er aus dem Stande der Technik bekannt ist.
- Fig. 2: zeigt eine Ausführungsform eines Solarkollektors, der sich in einer Hauptebene H erstreckt.
- Fig. 3: zeigt eine erste Ausführungsform eines Moduls für einen erfindungsgemäßen Solarkollektor.
- Fig. 4: zeigt eine alternative Ausführungsform eines Moduls.
- Fig. 5: zeigt eine weitere alternative Ausführungsform eines Moduls.
- Fig. 6: zeigt eine noch weitere alternative Ausführungsform eines Moduls.
- Fig. 7: zeigt eine wiederum andere Ausführungsform eines Moduls.
- Fig. 8: zeigt eine vorteilhafte Ausrichtung eines Solarkollektors.

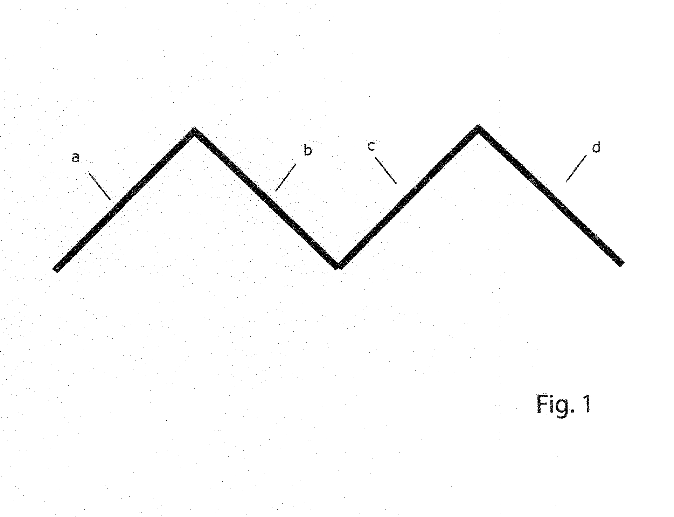

Fig. 1 zeigt in einer vereinfachten schematischen Darstellung einen Solarkollektor, wie er aus dem Stande der Technik bekannt ist. Hierbei werden relativ große Solarplatten (jeweils einige Quadratmeter groß) zusammengefügt. In dieser Weise lässt sich eine shed-dachförmige Fläche erzeugen. Diese kann durchaus auch als Dachfläche verwendet werden. Die Fläche kann im Einzelfall aus kleineren Modulen bestehen, welche jedoch alle eben sind. Typischerweise besteht eine vierteilige Fläche jedoch nur aus vier großen ebenen Modulen. In dieser Weise lässt sich zwar ein dreidimensionaler Solarkollektor erzeugen, jedoch sind die Möglichkeiten zur Anpassung an eine vorhandene Dach- oder Fassadenform gering. Ferner sind bei der Montage jeweils große Module zu transportieren. Die einzelnen Module werden typischerweise lediglich durch die Dachkonstruktion gehalten und sind nicht miteinander verbunden.

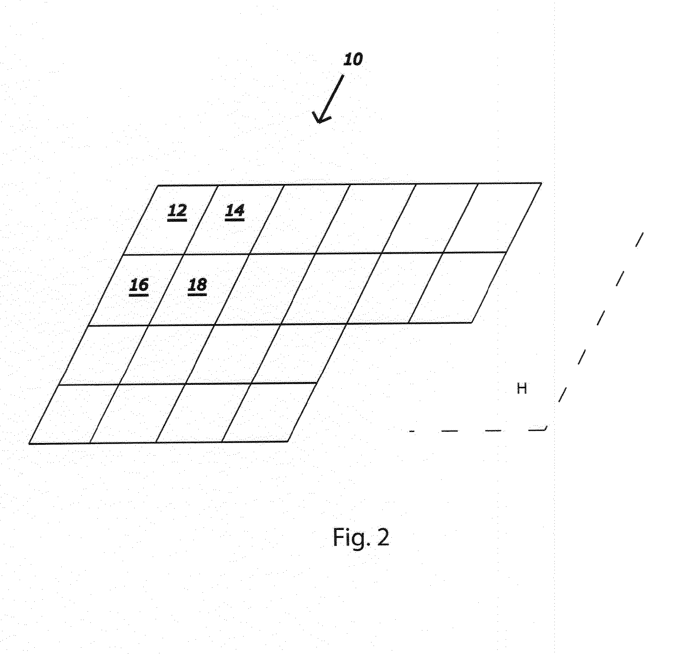

Fig. 2 zeigt in schematischer Ansicht einen Solarkollektor 10 nach der vorliegenden Erfindung. Dieser umfasst eine Vielzahl von einzelnen Modulen. Näher bezeichnet ist ein erstes Modul 12, ein zweites Modul 14, ein drittes Modul 16 und ein viertes Modul 18. Das Modul 12 weist zwei Seitenkanten zu benachbarten Modulen auf. Es kann daher an beiden Seitenkanten geeignete Verbindungen aufweisen. Das vierte Modul 18 dagegen weist sogar vier Seitenkanten zu benachbarten Modulen auf, so dass zweckmäßigerweise an allen vier Seitenkanten geeignete Verbindungsmittel vorzusehen sind.

Man erkennt an der äußeren Form des Solarkollektors 10, wie sich leicht der Gesamtumfang des Solarkollektors durch entsprechende Verbindung verschiedener Module an die Erfordernisse am Montageort anpassen lässt.

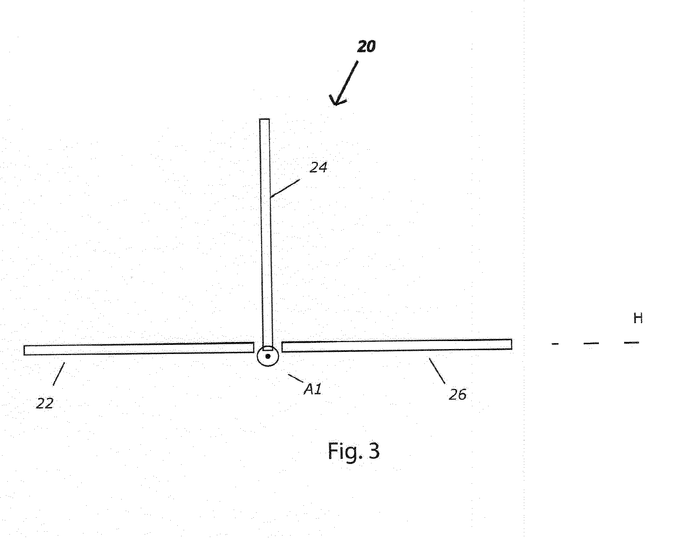

Fig. 3 zeigt in einer vereinfachten schematischen Seitenansicht eine erste Ausführungsform eines Moduls. Die Hauptebene H, in der sich das Modul zweckmäßigerweise mit anderen Modulen verbinden lässt, ist skizziert.

Bei dieser Hauptebene handelt es sich um eine zur Verbindungsebene der Schwerpunkte H-parallelen Ebene, die so gewählt ist, dass die sich entlang der Ebene erstreckenden Solarpaneele in der Ebene verlaufen.

Das gezeigte Solarmodul 20 umfasst ein erstes Solarpaneel 22, welches in der Ebene H verläuft. An das Paneel 22 schließt sich ein zweites Solarpaneel 24 an. Das zweite Paneel 24 verläuft senkrecht zur Hauptebene H. Die beiden Paneele stoßen entlang der Verbindungsachse A1 aneinander. An das zweite Solarpaneel 24 schließt sich ein drittes Solarpaneel 26 an. Das dritte Solarpaneel 26 verläuft wiederum in der Ebene H.

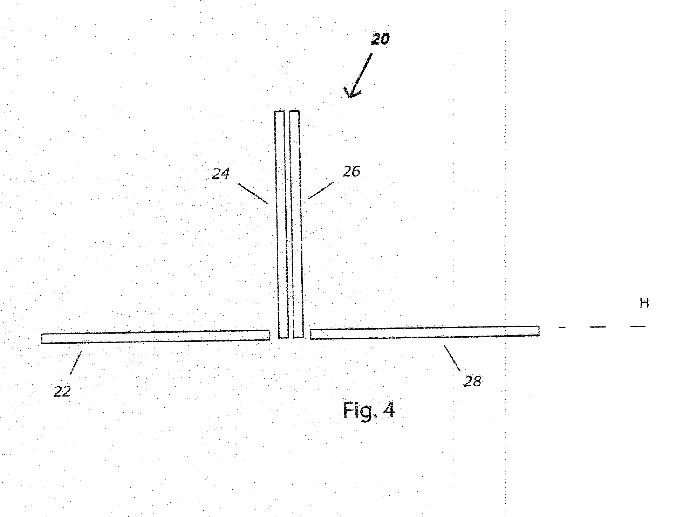

Fig. 4 zeigt in ähnlicher leicht vereinfachter Ansicht eine andere Ausführungsform eines Solarmoduls. Diese Ausführungsform umfasst vier Solarpaneele, ist in der Anordnung der Ausführungsform aus Fig. 3 jedoch ähnlich. In diesem Fall verlaufen zwei Solarpaneele, nämlich ein zweites Solarpaneel 24 und ein drittes Solarpaneel 26 senkrecht zur Hauptebene H. In der Hauptebene H verlaufen wiederum zwei Paneele, nämlich ein erstes Paneel 22 und ein viertes Paneel 28.

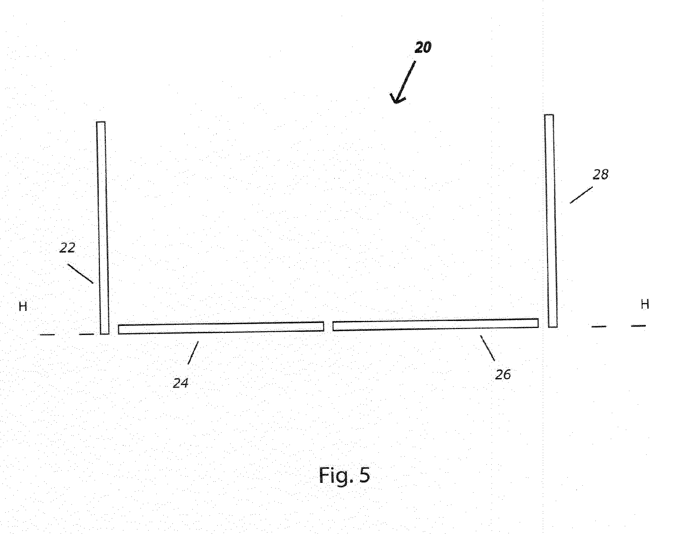

Fig. 5 zeigt eine Konstruktion, welche ebenfalls aus vier Solarpaneelen besteht. Hier erstreckt sich das erste Solarpaneel 22 senkrecht zur Hauptebene H. Das vierte Solarpaneel 28 erstreckt sich ebenfalls senkrecht zur Hauptebene H. In der Hauptebene H verlaufen das dazwischen angeordnete zweite Solarpaneel 24 und das dritte Solarpaneel 26. Bei dieser Anordnung stoßen die senkrecht verlaufenden Solarpaneele an benachbarte Module. Wenn die benachbarten Module gleich aufgebaut sind wie das gezeigte Modul, so können sich die senkrecht verlaufenden Module gegenseitig stützen.

Im Vergleich zur Konstruktion aus Fig. 3 und Fig. 4 erkennt man, dass die dort gezeigten Konstruktionen bezogen auf die mögliche Geometrie der Nachbarmodule flexibler sind. Wenngleich im Rahmen der vorliegenden Erfindung typischerweise eine Vielzahl gleicher Module miteinander verbunden wird, so ist es doch auch möglich, unterschiedliche Module miteinander zu verbinden.

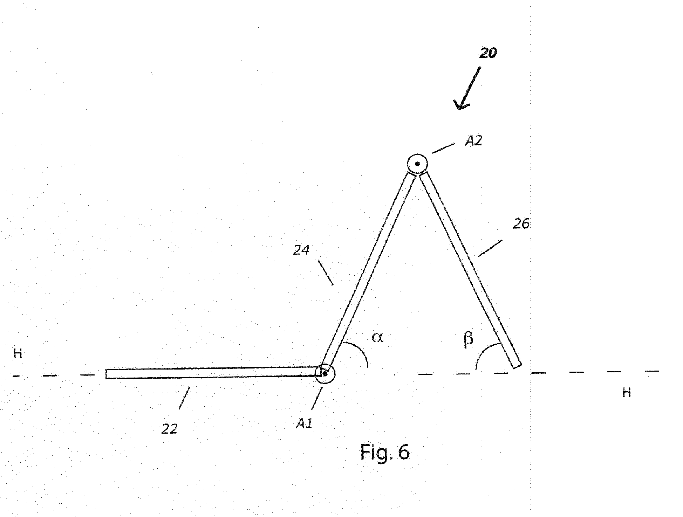

Fig. 6 zeigt in entsprechender schematischer Ansicht ein anderes Solarmodul 20, welches drei Solarpaneele umfasst. Das erste Solarpaneel 22 erstreckt sich wiederum in der Hauptebene H. An dieses Solarpaneel schließt sich entlang der Verbindungsachse A1 das zweite Solarpaneel 24 an. Es nimmt einen ersten Winkel Alpha (α) mit der Hauptachse ein. Als ersten Winkel mit der Hauptachse wird dabei der kleinere der beiden Winkel zur Hauptachse bezeichnet. Dieser ist erkennbar kleiner als 90 Grad, aber auch größer als 45 Grad. An das zweite Solarpaneel 24 schließt sich entlang der Verbindungsachse A2 ein drittes Solarpaneel 26 an. Dieses steht ebenfalls in einem Winkel zur Hauptachse H. Dies ist der Winkel Beta (β). Es handelt sich ebenfalls um den kleineren der beiden Winkel des dritten Solarpaneels 26 zur Hauptachse. Dieser ist ebenfalls in einem Bereich zwischen 45 Grad und 90 Grad gewählt. Wie es erkennbar ist und wie es häufig zweckmäßig ist, sind die beiden Winkel Alpha (α) und Beta gleich groß. Sie lassen sich allerdings auch grundsätzlich verschieden wählen.

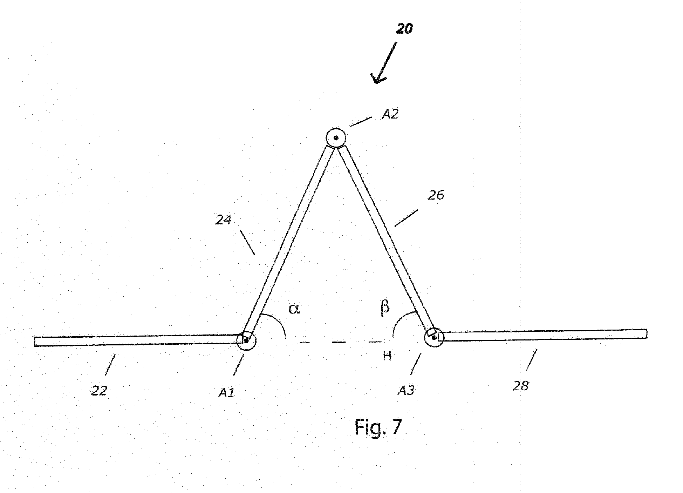

Fig. 7 zeigt eine weitere Ausführungsform eines Solarmoduls, welche der in Fig. 6 gezeigten nicht unähnlich ist. Dieses Solarmodul besteht jedoch aus vier Solarpaneelen und umfasst daher auch ein viertes Solarpaneel 28. Das vierte Solarpaneel 28 liegt wie das erste Solarpaneel 22 in der Hauptebene H. Das zweite Solarpaneel 24 und das dritte Solarpaneel 26 schließen wiederum Winkel mit dieser Hauptebene ein, nämlich die Winkel Alpha (α) und Beta (β). Diese Winkel entsprechen den Winkeln Alpha (α) und Beta (β) aus der Ausführungsform in Fig. 6.

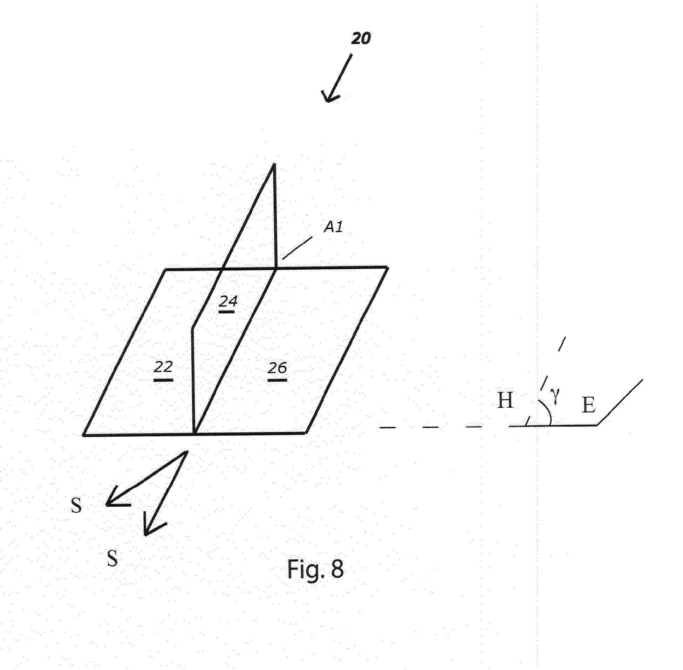

Fig. 8 erläutert schematisch eine günstige Aufstellung eines Solarkollektors 10. Von dem Solarkollektor ist in der Zeichnung zur Vereinfachung nur ein einzelnes Solarmodul 20 wiedergegeben. Dieses ist ein Solarmodul nach der schon in Fig. 3 gezeigten Ausführungsformen. Es umfasst ein erstes Solarpaneel 22, ein zweites Solarpaneel 24, vorzugsweise Solarpaneel, und ein drittes Solarpaneel 26. Das zweite Solarpaneel 24 steht senkrecht auf den beiden anderen Solarpaneelen. Es ist zweckmäßig, wenn sich die Hauptebene H, in welcher sich die Solarpaneele 22 und 26 erstrecken, geneigt zur Ebene E des Untergrunds / Bodens, also der Erdoberfläche befindet. Es ist ferner zweckmäßig, wenn die Verbindungsachse A1 nach Süden weist. Die Südrichtung S ist beispielhaft für die Ebenen E und H eingetragen. Diese Ausrichtung führt dazu, dass die einzelnen Solarpaneele optimal beschienen werden. Beispielsweise könnten am Morgen die Paneele 22 und 24 gut beschienen werden, am Mittag die Paneele die 22 und 26 und am Abend die Paneele 24 und 26. Daher ist es im Sinne der vorliegenden Erfindung, einen Solarkollektor der beschriebenen und beanspruchten Art zu konstruieren, bei welchem zumindest die erste Verbindungsachse nach Süden ausgerichtet ist.

Die beschriebene Anordnung von Solarpaneelen bietet erstaunliche Vorteile gegenüber einer flachen Anordnung. Diese Vorteile bestehen auch unabhängig von der genauen Verbindung zu Modulen. Gegenüber einer flachen Anordnung ist die Energieausbeute pro bedeckte Grundfläche deutlich höher.

Bekanntlich wurden bislang viele Versuche unternommen, um die Energieausbeute pro PV-Zelle oder pro Fläche einer PV-Zelle zu erhöhen. Im Rahmen der vorliegenden Erfindung wurde jedoch erkannt, dass die Energieausbeute dann erheblich gesteigert werden kann, wenn man auch die Ausnutzung einer vorgegebenen Grundfläche optimiert.

Im Zeitraum vom 13.11 bis 29.11.2014 wurden bei verschiedenen Wetterverhältnissen Messungen durchgeführt. Erfindungsgemäße Solarkollektoren wurden dabei mit Referenzkollektoren verglichen, die die gleiche Grundfläche in Anspruch nahmen. Im Rahmen dieser Messreihen konnte wissenschaftlich bestätigt werden, dass die erfindungsgemäßen Solarkollektoren gegenüber den herkömmlichen Referenz-Kollektoren einen Kurzschlussstrom (und damit eine Leistung) erzeugen konnten, der um einen Faktor von 1,8 bis 3,8 höher lag als bei den Referenz-Kollektoren. Die Leistungsvorteile sind dabei u.a. vom Wetter, von der Jahreszeit und von der Tageszeit abhängig, waren jedoch unter allen Messumständen erheblich, betrugen nämlich mindestens 80% (entsprechend dem Faktor 1.8).

Insgesamt erkennt man, wie sich ein sehr effizienter Solarkollektor preiswert und stabil herstellen lässt.

### Bezugszeichenliste

- 10: Solarkollektor
- 12: erstes Modul
- 14: zweites Modul
- 16: drittes Modul
- 18: viertes Modul
- 20: Modul
- 22: erstes Solarpaneel
- 24: zweites Solarpaneel
- 26: drittes Solarpaneel
- 28: viertes Solarpaneel
- A1: erste Verbindungsachse
- A2: zweite Verbindungsachse
- A3: dritte Verbindungsachse
- H: Hauptebene
- E: Ebene des Untergrundes

## Patentansprüche

1. Solarkollektor (10), der eine Vielzahl von Modulen (20) umfasst, wobei jedes Modul (20) mindestens ein erstes Solarpaneel (22) und ein zweites Solarpaneel (24) umfasst, und wobei Module (20) zu einem Solarkollektor (10) verbunden werden können, wobei sich die Schwerpunkte der Module (20) parallel zu einer Hauptebene (H) erstrecken, und sich das erste Solarpaneel (22) in der Hauptebene (H) erstreckt und sich das zweite Solarpaneel (24) in einem ersten Winkel zur Hauptebene (H) erstreckt, und die Solarpaneele entlang einer ersten Verbindungsachse so befestigt werden, dass der erste Winkel unveränderlich ist.

2. Solarkollektor (10) gemäß Anspruch 1, welcher ferner ein drittes Solarpaneel (26) umfasst.

3. Solarkollektor (10) gemäß Anspruch 2, welcher ein drittes Solarpaneel (26) umfasst, welches sich in der Hauptebene (H) erstreckt.

4. Solarkollektor (10) gemäß Anspruch 2 oder 3, welcher ein drittes Solarpaneel (26) umfasst, welches sich in einem zweiten, von Null verschiedenen, Winkel zur Hauptachse erstreckt.

5. Solarkollektor (10) nach einem der vorhergehenden Ansprüche, welcher eine Vielzahl von Modulen (20) umfasst, welche trennbar sind.

6. Solarkollektor (10) nach einem der vorhergehenden Ansprüche, welcher aus einer Vielzahl gleichartiger Module (20) besteht

7. Solarkollektor (10) nach einem der vorhergehenden Ansprüche, bei welchem die erste Verbindungsachse (A1) nach Süden ausgerichtet ist.

8. Solarkollektor (10) nach einem der vorhergehenden Ansprüche, bei dem der erste Winkel 90 Grad beträgt.

9. Solarkollektor (10) nach einem der vorhergehenden Ansprüche, bei dem der erste Winkel zwischen 50 und 80 Grad beträgt.

10. Solarkollektor (10) nach einem der Ansprüche 4 bis 9, wobei der erste Winkel und der zweite Winkel gleich groß sind.

11. Solarkollektor (10), welcher ein erstes Solarpaneel (22), ein zweites Solarpaneel (24), ein drittes Solarpaneel (26) und ein viertes Solarpaneel (28) umfasst, wobei das erste Solarpaneel senkrecht zur Hauptebene steht, das zweite Solarpaneel sich an das erste Solarpaneel anschließt und in der Hauptebene verläuft, das dritte Solarpaneel sich an das zweite Solarpaneel anschließt und in der Hauptebene verläuft, und das vierte Solarpaneel sich an das dritte Solarpaneel anschließt und senkrecht zur Hauptebene verläuft.

12. Solarkollektor (10), welcher ein erstes, ein zweites und ein drittes Solarpaneel (26) umfasst, wobei sich das erste Solarpaneel in der Hauptebene erstreckt, sich das zweite Solarpaneel an das erste Solarpaneel anschließt und senkrecht auf der Hauptebene steht, und sich das dritte Solarpaneel an das zweite Solarpaneel anschließt und in der Hauptebene verläuft.

13. Solarkollektor (10), welcher ein erstes Solarpaneel (22), ein zweites Solarpaneel (24), ein drittes Solarpaneel (26) und ein viertes Solarpaneel (28) umfasst, wobei sich das erste Solarpaneel in der Hauptebene erstreckt, sich das zweite Solarpaneel an das erste Solarpaneel anschließt und senkrecht zur Hauptebene erstreckt, wobei das dritte Solarpaneel an das zweite Solarpaneel anschließt und senkrecht zur Hauptebene verläuft, und wobei das vierte Solarpaneel an das dritte Solarpaneel angrenzt und in der Hauptebene verläuft.

14. Solarkollektor (10), welcher ein erstes Solarpaneel (22), ein zweites Solarpaneel (24) und ein drittes Solarpaneel (26) umfasst, wobei das erste Solarpaneel (22) sich in der Hauptebene (H) erstreckt, und das zweite Solarpaneel (24) sich entlang einer ersten Verbindungsachse an das erste Solarpaneel anschließt, und das zweite Solarpaneel an der ersten Verbindungsachse mit der Hauptebene einen Winkel zwischen 50 und 80 Grad einschließt, und wobei sich an das zweite Solarpaneel (24) entlang einer zweiten Verbindungsachse ein drittes Solarpaneel (26) anschließt, und das dritte Solarpaneel (26) mit der Hauptebene (H) einen Winkel einschließt, welcher 50-80 Grad beträgt.

15. Solarkollektor (10), welcher ein erstes Solarpaneel (22), ein zweites Solarpaneel (24), ein drittes Solarpaneel (26) und ein viertes Solarpaneel (28) umfasst, wobei sich das zweite Solarpaneel an das erste Solarpaneel anschließt und mit der Hauptebene einen ersten Winkel von 50-80 Grad bildet, und wobei sich das dritte Solarpaneel an das zweite Solarpaneel anschließt und mit der Hauptachse ebenfalls einen Winkel von 50-80 Grad bildet, und wobei sich das vierte Solarpaneel entlang einer dritten Verbindungsachse an das dritte Solarpaneel anschließt, und das vierte Solarpaneel in der Hauptebene verläuft.
